Europäisches Patentamt

European Patent Office

Office européen des brevets

(11) Veröffentlichungsnummer: **0 163 072**
**B1**

(12) # EUROPÄISCHE PATENTSCHRIFT

(45) Veröffentlichungstag der Patentschrift:
05.07.89

(51) Int. Cl.⁴: **C 03 B 37/02, C 03 B 37/018**

(21) Anmeldenummer: 85104148.3

(22) Anmeldetag: 04.04.85

(54) Verfahren zum Herstellen einer Vorform zum Ziehen von Lichtleitfasern.

(30) Priorität: 26.05.84 DE 3419835

(43) Veröffentlichungstag der Anmeldung:
04.12.85 Patentblatt 85/49

(45) Bekanntmachung des Hinweises auf die Patenterteilung:
05.07.89 Patentblatt 89/27

(84) Benannte Vertragsstaaten:
AT CH DE FR GB IT LI NL

(56) Entgegenhaltungen:
EP-A- 0 032 390
EP-A- 0 100 174
DE-A- 3 315 165
GB-A- 2 019 383

Die Akte enthält technische Angaben, die nach dem Eingang der Anmeldung eingereicht wurden und die nicht in dieser Patentschrift enthalten sind.

(73) Patentinhaber: AEG KABEL Aktiengesellschaft,
Bonnenbroicher Strasse 2-14,
D-4050 Mönchengladbach 2 (DE)

(72) Erfinder: Glessner, Bertram, Dipl.-Phys.,
Aachenerstrasse 25, D-4000 Düsseldorf (DE)
Erfinder: Heinen, Peter, Am Driesch 35,
D-5137 Waldfeucht (DE)
Erfinder: Pitsch, Paul, Dipl.-Phys.,
Heinrich-Pesch-Strasse 36,
D-4050 Mönchengladbach 2 (DE)
Erfinder: Peglow, Hartmut, Grechte 3,
D-4156 Willich 3 (DE)

(74) Vertreter: Langer, Karl-Heinz, Dipl.-Ing., Licentia
Patent-Verwaltungs-GmbH Theodor-Stern-Kai 1,
D-6000 Frankfurt/Main 70 (DE)

## Beschreibung

Die Erfindung betrifft ein Verfahren zum Herstellen einer Lichtleitfaser, bei dem zunächst ein rohrförmiger Glaskörper durch Dotieren des Kernmaterials mit Bereichen mit unterschiedlichem Brechungsindex hergestellt und dieser Glaskörper zu einer Glasfaser ausgezogen wird.

Optisch leitende Glasfasern werden aus Vorformen gezogen. Nach dem CVD-Verfahren wird ein aus Mantelglas bestehendes Rohr innenseitig mit Kernglas beschichtet. Das Kernglas besteht insbesondere aus mit Germaniumdioxyd ($GeO_2$) dotiertem Siliciumdioxyd ($SiO_2$) und weist einen höheren Brechungsindex auf als das Mantelglas. Man kann nach dem CVD-Verfahren auch einen stabförmigen Grundkörper zunächst mit dotiertem Kernglas und danach mit einem Mantelglas beschichten. Der Grundkörper wird schliesslich entfernt. In beiden Fällen erhält man, ggfs. nach einer Verglasung der aufgebrachten Schichten, einen rohrförmigen Körper. Dabei wird der rohrförmige Körper, von einem Ende beginnend, fortlaufend über seine Länge hin bis zum Erweichungspunkt erhitzt, so dass er zu einem Vollkörper zusammenfällt. Das Kollabieren kann als getrennter Verfahrensschritt oder gemeinsam mit dem Faserziehen erfolgen.

Insbesondere bei mit $GeO_2$ dotiertem Kernglas wurde in dessen zentralem Bereich ein nachteiliger Einbruch (Dip) des Brechungsindexes festgestellt. Dieser entsteht dadurch, dass bei der zur Kollabierung bzw. Faserziehen erforderlichen hohen Erhitzung bevorzugt $GeO_2$ aus der inneren Rohroberfläche verdampft. Infolgedessen entsteht ein zentraler Bereich des kollabierten Kern mit einer Verarmung an $GeO_2$. Ein solcher in der Vorform entstandener Dip ergibt sich dann in geometrisch äquivalenter Form auch in der gezogenen optischen Faser.

Dieser unerwünschte Dip verursacht, je nach Grösse, in Multimodegradienten- und Monomodefasern nachteilige, physikalische Effekte:
- Reduzierung der Einkoppeleffektivität,
- Erhöhung der Mikrokrümmungsempfindlichkeit,
- Beeinflussung der Cut-Off-Wellenlänge,
- Reduzierung der Übertragungsbandbreite,
- Fehlinterpretation der DMD-Messmethode,
- negative Beeinflussung des $\gamma$-Faktors bei grossen LWL-Strecken,
- Empfindlichkeit der Bandbreitenmessung bezüglich Einkopplung und Microbendings.

Trotz zahlreicher Versuche ist es bisher nicht gelungen, den Dip vollständig zu vermeiden, man konnte ihn lediglich reduzieren. Um solch kleine Dip-Werte zu erreichen, musste der zunächst grosse Innendurchmesser des beschichteten Rohres durch Vorkollabierung verkleinert werden. Nach der Verkleinerung wurde die $GeO_2$-verarmte innere Hautschicht durch Ätzen entfernt. Dieses Vorverfahren wurde bis zu einem möglichst kleinen verbleibenden Innendurchmesser durchgeführt, so dass beim abschliessenden endgültigen Kollabieren ein nur relativ geringer $GeO_2$-verarmter Flächenanteil auch nur eine schmale Dip-Zone ergeben konnte. Ein weiteres bekanntes Verfahren zur Reduzierung eines Dip besteht darin, dass während des Kollabierens germaniumhaltige Stoffe zugesetzt werden, um der $GeO_2$-Verarmung entgegenzuwirken.

Durch die Europäische Offenlegungsschrift 0 100 174 ist es bekannt, die konsolidierte Vorform zum Herstellen einer optischen Faser erst an einem Ende zu schliessen, den Hohlkörper zu evakuieren, anschliessend das andere Ende ebenfalls zu verschliessen und schliesslich das Innere der Vorform zusammenfallen zu lassen, wobei ein gleichzeitiges Ziehen stattfindet. Das endgültige Ziehen zur optischen Faser erfolgt dann anschliessend.

Die bekannten Verfahren zur Verminderung des Dips waren aufwendig und nicht voll befriedigend, da ein Restdip nicht vermeidbar war, bzw. das Vorkollabieren mit Unterdruck erforderlich war. Der Erfindung liegt deshalb die Aufgabe zugrunde, das Verfahren der eingangs genannten Art so zu gestalten, dass ein Dip auf einfache Weise möglichst vollständig vermieden wird.

Diese Aufgabe wird bei einem Verfahren der eingangs erwähnten Art nach der Erfindung dadurch gelöst, dass beim Ziehen des rohrförmigen Glaskörpers ein Unterdruck im Inneren des rohrförmigen Glaskörpers vorhanden ist, der derart gewählt wird, dass die fertige Glasfaser möglichst keine Verarmung an Dotiermaterial (Dip) aufweist.

Der Erfindung liegt die wesentliche Erkenntnis zugrunde, dass durch einen entsprechenden Unterdruck beim Ziehen ein Dip vermieden werden kann. Beim Verfahren nach der Erfindung wird vorzugsweise darauf geachtet, dass die nach der Erfindung hergestellte Glasfaser einen möglichst kreisförmigen Querschnitt aufweist. Dies erreicht man gemäss einer Weiterbildung der Erfindung vorzugsweise dadurch, dass der rohrförmige Glaskörper durch Vorkollabieren mechanisch so stabil gemacht wird, dass beim weiteren Faserziehen mit Unterdruck keine Glasfaser mit elliptischem Querschnitt entsteht. Zu diesem Zweck muss der rohrförmige Glaskörper vor dem Faserziehen eine entsprechende Geometrie aufweisen, indem er beispielsweise einen entsprechend kleinen Innendurchmesser oder ein entsprechend kleines Verhältnis von Innen- zu Aussendurchmesser aufweist.

Das Verfahren nach der Erfindung führt zu dem überraschenden Ergebnis, dass die Entstehung eines Dips bzw. ein Dip vollständig bzw. nahezu vollständig vermeidbar ist und somit das Ergebnis wesentlich besser ist als bei bekannten Verfahren. Der Unterdruck kann beliebig niedrige Werte annehmen, wobei jedoch in der Praxis der Druck nur soweit verringert wird, dass sich der Dip mit Sicherheit nicht ausbildet.

Der erforderliche Mindestunterdruck hängt von der Art der für die Vorform verwendeten Materialien, insbesondere der Dotierstoffe ab. Für den jeweiligen Fall geeignete optimale Druckwerte können durch einfache Versuche festgestellt werden, indem beispielsweise eine Versuchsvorform über die Länge mit variablem Druck zur Faser ausgezogen wird. Durch Messung in verschiedenen Ebenen der Faser lässt sich feststellen, bei welchem Unterdruck der Dip verschwindet bzw. unmerklich klein wird.

Gemäss einer Ausführungsform der Erfindung wird der rohrförmige Glaskörper vor dem Ziehen ohne Unterdruck vorkollabiert. Für den Fall, dass im Glasrohr vor dem Ziehen eine verarmte Dotierungsschicht vorhanden ist, wird diese verarmte Dotierungsschicht vorzugsweise entfernt. Vorzugsweise besteht beim Faserziehen mit Unterdruck dieser Unterdruck gegenüber dem auf die Aussenwand des rohrförmigen Glaskörpers wirkenden Druck.

Die Erfindung ist ganz allgemein anwendbar, so dass es beispielsweise nicht darauf ankommt, ob der Bereich mit unterschiedlichem Brechungsindex durch Innen- oder Aussenbeschichtung hergestellt wird.

Die Innenbeschichtung oder Aussenbeschichtung des Glasrohres besteht beispielsweise beim Verfahren nach der Erfindung aus dotiertem Silizium. Als Dotierstoffe werden beispielsweise Germaniumdioxid und/oder Phosphorpentoxid verwendet.

Die Erfindung wird im folgenden an Ausführungsbeispielen erläutert.

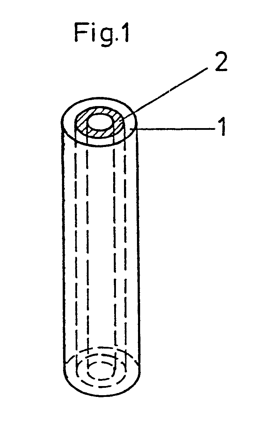

Der in Fig. 1 vorhandene rohrförmige Glaskörper besteht aus einer äusseren Mantelschicht 1 aus im wesentlichen reinem $SiO_2$-Glas und einer inneren Kernschicht 2 aus im wesentlichen mit $GeO_2$ dotiertem $SiO_2$-Glas. Der $GeO_2$-Gehalt nimmt zur Mitte hin zu, so dass im Kern der zu ziehenden Glasfaser das gewünschte Gradientenprofil des Brechungsindex mit exponentiellem Verlauf entsteht.

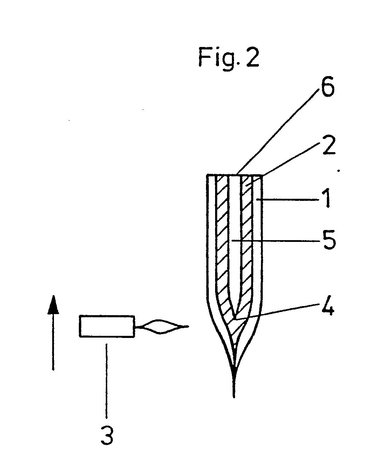

Durch einen Brenner bzw. Ofen 3 wird gemäss der Fig. 2 der rohrförmige Glaskörper in einem bestimmten Bereich 4 bis zum Erweichungspunkt erhitzt. Der erweichte Bereich wird zu einer Glasfaser ausgezogen. Hierbei wird im noch nicht zur Glasfaser ausgezogenen und daher noch rohrförmigen Teil 5 ein Unterdruck erzeugt, der so bemessen ist, dass ein Dip in der Glasfaser verhindert wird. Der Unterdruck im Bereich 5 wird beispielsweise dadurch erzeugt, dass an der Öffnung 6 eine Vakuumpumpe angeschlossen wird.

Damit der rohrförmige Körper sich nicht infolge des inneren Unterdrucks elliptisch zu einer Faser verformt, darf dessen Wandstärke relativ zum Innendurchmesser nicht zu klein sein. Deshalb wurde vor dem endgültigen Ziehen zur Glasfaser gemäss Figur 2 ein nach dem einen vertikalen CVD-Verfahren (VCVD) innenbeschichtetes Rohr, welches einen grösseren Aussendurchmesser und geringere Wandstärke aufwies, zunächst bei atmosphärischem Innendruck vorkollabiert. Die dadurch entstandene $GeO_2$-verarmte innere Schicht wurde durch Ätzen entfernt. Da bei dem nachfolgenden endgültigen Ziehen zur Faser gemäss Fig. 2 ein innerer Unterdruck von beispielsweise 400 mbar aufrechterhalten wurde, konnte sich kein $GeO_2$-verarmter innerer Bereich in der Faser mehr ausbilden.

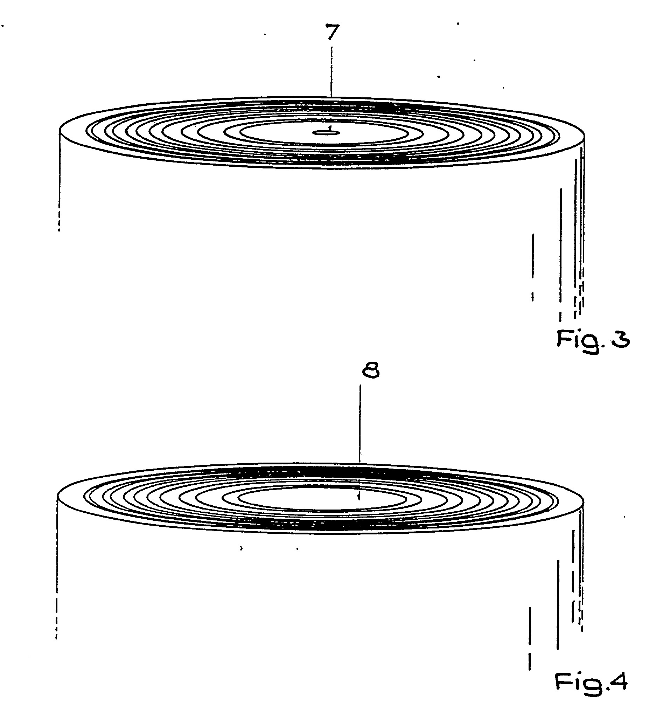

Während die nach bekannten Verfahren hergestellten Glasfasern gemäss der Figur 3 in der Mitte einen Dip 7 aufweist, ist bei den nach der Erfindung hergestellten Glasfasern gemäss der Figur 4 kein Dip festzustellen. Anstelle von nur einer Innenschicht werden bei der Herstellung von Glasfasern im allgemeinen sehr viele Schichten mit unterschiedlichem Brechungsindex aufgebracht, die in den Figuren 3 und 4 mit der Bezugsziffer 8 bezeichnet sind. Der in der Figur 3 zu sehende, unerwünschte Dip ist ein aus Germaniumdioxid verarmter Bereich.

**Patentansprüche**

1. Verfahren zum Herstellen einer Lichtleitfaser, bei dem zunächst ein rohrförmiger Glaskörper durch Dotieren des inneren Kernmantels (2) mit Bereichen mit unterschiedlichem Brechungsindex hergestellt und dieser Glaskörper zu einer Glasfaser ausgezogen wird, dadurch gekennzeichnet, dass beim Ziehen des rohrförmigen Glaskörpers ein Unterdruck im Inneren (5) des rohrförmigen Glaskörpers vorhanden ist, der derart gewählt wird, dass die fertige Glasfaser möglichst keine Verarmung an Dotiermaterial (Dip) aufweist.

2. Verfahren nach Anspruch 1, dadurch gekennzeichnet, dass der rohrförmige Glaskörper durch Vorkollabieren mechanisch so stabil gemacht wird, dass beim Ziehen des rohrförmigen Glaskörpers mit Unterdruck keine Glasfaser mit elliptischem Querschnitt entsteht.

3. Verfahren nach Anspruch 1 oder 2, dadurch gekennzeichnet, dass der rohrförmige Glaskörper ohne Unterdruck vorkollabiert wird.

4. Verfahren nach einem der Ansprüche 1 bis 3, dadurch gekennzeichnet, dass für den Fall, dass im Glasrohr vor dem Ziehen eine verarmte Dotierungsschicht vorhanden ist, diese verarmte Dotierungsschicht entfernt wird.

5. Verfahren nach einem der Ansprüche 1 bis 4, dadurch gekennzeichnet, dass ein Unterdruck gegenüber dem Atmosphärendruck hergestellt wird.

6. Verfahren nach einem der Ansprüche 1 bis 5, dadurch gekennzeichnet, dass der Unterdruck im Inneren des Glasrohres gegenüber dem auf die Aussenwand des rohrförmigen Glaskörpers wirkenden Druck hergestellt wird.

7. Verfahren nach einem der Ansprüche 1 bis 6, dadurch gekennzeichnet, dass der Bereich (1, 2) mit unterschiedlichem Brechungsindex durch Innen- oder Aussenbeschichtung hergestellt wird.

8. Verfahren nach einem der Ansprüche 1 bis 7, dadurch gekennzeichnet, dass die Innenbeschichtung oder Aussenbeschichtung des Glasrohres aus dotiertem Silizium besteht.

9. Verfahren nach Anspruch 8, dadurch gekennzeichnet, dass als Dotierstoff Germaniumdioxid und/oder Phosphorpentoxid verwendet wird.

## Claims

1. Process for the manufacture of an optical fibre, in which first of all a tubular glass body is manufactured by doping the inner core cladding (2) with areas with varying index of refraction and this glass body is drawn out to form a glass fibre, characterised in that during the drawing of the tubular glass body a reduced pressure is present on the inside (5) of the tubular glass body which is selected in such a way that the finished glass fibre exhibits no impoverishment in doping material (dip).

2. Process according to Claim 1, characterised in that the tubular glass body is made mechanically so stable by pre-collapsing that during the drawing of the tubular glass body under reduced pressure no glass fibre of elliptical cross-section is produced.

3. Process according to Claim 1 to 3, characterised in that the tubular glass body is pre-collapsed without reduced pressure.

4. Process according to one of Claims 1 to 3, characterised in that in the event of an impoverished doping layer being present in the glass tube prior to the drawing, this impoverished doping layer is removed.

5. Process according to one of Claims 1 to 4, characterised in that a reduced pressure compared with atmospheric pressure is created.

6. Process according to one of Claims 1 to 5, characterised in that the reduced pressure created on the inside of the glass tube is a low pressure compared with the pressure acting on the outside wall of the tubular glass body.

7. Process according to one of Claims 1 to 6, characterised in that the area (1, 2) with varying index of refraction is created by inner or outer coating.

8. Process according to one of Claims 1 to 7, characterised in that the inner coating or outer coating of the glass tube consists of doped silicon.

9. Process according to Claim 8, characterised in that germanium dioxide and/or phosphorus pentoxide is used as doping material.

## Revendications

1. Procédé de fabrication d'une fibre optique, dans lequel on fabrique tout d'abord un corps tubulaire de verre en dopant la couche-noyau intérieure (2) qui présente des zones d'indice de réfraction différent, puis on étire ce corps de verre pour obtenir une fibre de verre, caractérisé en ce que, lors de l'étirage du corps tubulaire de verre, il existe, dans l'intérieur (5) du corps tubulaire de verre, une dépression que l'on choisit de façon que la fibre de verre, finie, ne présente, le plus possible, aucun appauvrissement en matériau dopant (dip/chute).

2. Procédé selon la revendication 1, caractérisé en ce que, par préécrasement sur soi-même, on rend mécaniquement le corps tubulaire de verre suffisamment rigide pour que, lors de l'étirage du corps tubulaire de verre sous dépression, il n'apparaisse pas de fibres de verre de section elliptique.

3. Procédé selon la revendication 1 ou 2, caractérisé en ce que l'on procède au préécrasement sur lui-même du corps tubulaire de verre sans dépression.

4. Procédé selon l'une des revendications 1 à 3, caractérisé en ce que dans le cas où il existe dans le tube de verre, avant l'étirage, une couche appauvrie en produit dopant, on enlève cette couche appauvrie en produit dopant.

5. Procédé selon l'une des revendications 1 à 4, caractérisé en ce que l'on crée une dépression par rapport à la pression atmosphérique.

6. Procédé selon l'une des revendications 1 à 5, caractérisé en ce que l'on crée la dépression à l'intérieur du tube de verre par rapport à la pression exercée sur la paroi extérieure du corps tubulaire de verre.

7. Procédé selon l'une des revendications 1 à 6, caractérisé en ce que l'on réalise la zone (1, 2) d'indice de réfraction différent par revêtement intérieur ou extérieur.

8. Procédé selon l'une des revendications 1 à 7, caractérisé en ce que le revêtement intérieur ou le revêtement extérieur du tube de verre est constitué de silicium dopé.

9. Procédé selon la revendication 8, caractérisé en ce que comme produit dopant on emploie du dioxyde de germanium et/ou du pentoxyde de phosphore.

## Fig.1

Fig. 2

7

Fig. 3

8

Fig.4

9